# EUROPÄISCHE PATENTANMELDUNG

(11) **EP 1 115 067 A2**
(43) Veröffentlichungstag der Anmeldung: **11.07.2001**
(21) Anmeldenummer: 00126008.2
(22) Anmeldetag: 28.11.2000
(51) Int. Cl.: G06F 13/40

(54) **Bussystemtreiber**

(30) Priorität: 14.12.1999 DE 19960243
(71) Anmelder: Infineon Technologies AG, 81669 München (DE)
(72) Erfinder: Nygren, Aaron, 81667 München (DE)
(74) Vertreter: MÜLLER & HOFFMANN Patentanwälte

(57) **Zusammenfassung**

Die Erfindung betrifft ein Bussystem, bei dem mehrere Leitungsstränge (3₀ bis 3₇) über Driver (4) mit einem Bus (1) verbunden sind. An optionalen Unterbrechungsstellen kann der Bus mit nicht benötigten Leitungssträngen aufgetrennt werden.

## Beschreibung

Die vorliegende Erfindung betrifft ein Bussystem mit einem zu einem Ausgang führenden Bus und einer Vielzahl von Leitungssträngen, die über jeweils einen Driver (Ansteuerglied) an Verbindungsstellen mit dem Bus verbunden sind.

In beispielsweise Halbleiterspeichern führen von einzelnen Speicherzellenfeldern Leitungsstränge zu Bussen, die eine Vielzahl von Signalen zu übertragen vermögen. Solche Busse können beispielsweise Tristate-Busse sein, also Busse, die drei Zustände anzunehmen vermögen, nämlich "driven high" (angesteuert hoch), "driven low" (angesteuert niedrig) und "not driven" (nicht angesteuert).

In den einzelnen Leitungssträngen befinden sich vor den Verbindungsstellen mit dem Bus die Driver, die eine Verstärkung der Signale in den einzelnen Leitungen der jeweiligen Leitungsstränge bewirken und den Leitungsstrang bzw. die Leitung auswählen, der bzw. die gerade in Verbindung mit dem Bus treten kann.

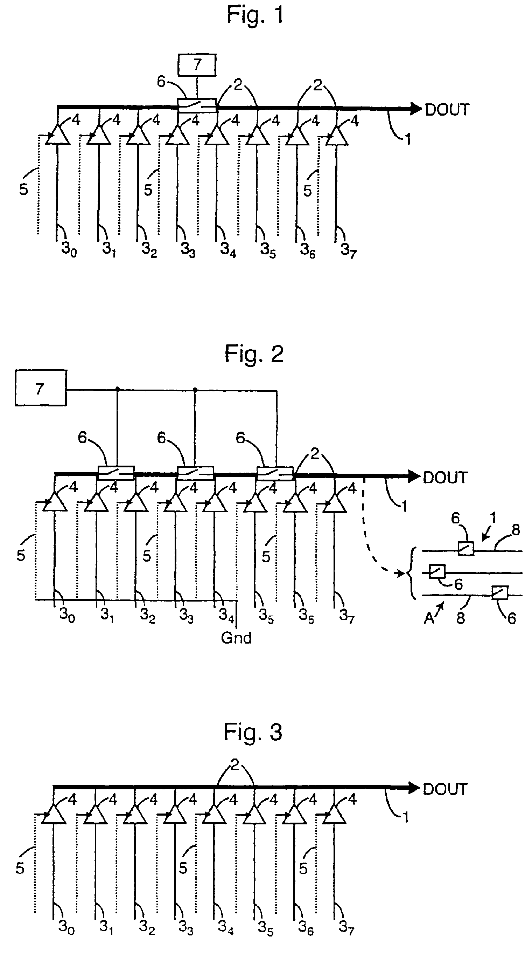

Fig. 3 zeigt schematisch ein solches bestehendes Bussystem mit einem Bus 1, der zu einem Ausgang DOUT führt und an den an Verbindungsstellen 2 jeweils ein Leitungsstrang 3₀ bis 3₇ angeschlossen ist. In jedem Leitungsstrang 3₀ bis 3₇ liegt ein Driver 4, der jeweils über einen Steueranschluß 5 ansteuerbar ist, um demjenigen Leitungsstrang aus den Leitungssträngen 3₀ bis 3₇ auszuwählen, der mit dem Bus 1 verbunden werden soll, und um das in dem ausgewählten Leitungsstrang geführte Signal zu verstärken.

Bei den Leitungssträngen 3₀ bis 3₇ kann es sich jeweils um eine Leitung oder aber auch um mehrere Leitungen, beispielsweise acht Leitungen, handeln. Liegen mehrere Leitungen in einem Leitungsstrang 3₀ bis 3₇ vor, so kann der Driver 4 zusätzlich eine Leitung aus dem ausgewählten Leitungsstrang herausgreifen und diese Leitung in Verbindung mit dem Bus 1 bringen.

Je mehr Driver mit einem solchen Tristate-Bus 1 verbunden sind, um so niedriger wird die Arbeitsgeschwindigkeit des Tristate-Busses 1. Dies ist darauf zurückzuführen, daß mit jedem weiteren Driver mehr Source- und Drain-Übergänge und zusätzliche Verdrahtung vorliegen, was die Kapazität des Bussystems ansteigen läßt. Eine höhere Kapazität führt aber zu einem Verlust an Arbeitsgeschwindigkeit.

Dieser Verlust an Arbeitsgeschwindigkeit kann in gewissen Grenzen durch Steigerung der Driverstärke ausgeglichen werden. Dies ist aber nur bis zu einem relativ geringen Maß möglich, da erhöhte Source- und Drain-Flächen für den stärkeren Driver ebenfalls die Kapazität steigern. Außerdem ist zu beachten, daß mit zunehmender Anzahl an Drivern auch die Anzahl der Ansteuerleitungen 5 für die Enable-Signale (Freigabesignale für die jeweiligen Driver 4) zunimmt, was ebenfalls zu einer Kapazitätssteigerung beiträgt.

Dies bedeutet, daß das in Fig. 3 gezeigte Bussystem solange hervorragend arbeitet, wie die Anzahl der Driver 4 relativ gering ist. Das Betriebsverhalten des Bussystemes verschlechtert sich aber zunehmend, je mehr Driver 4 mit Leitungssträngen 3₀ bis 3₇ und Ansteuerleitungen 5 für Enable-Signale an den Bus 1 angeschlossen werden. Jeder Driver 4 wird nämlich in seinem Betriebsverhalten von den Kapazitäten der übrigen Driver 4 beeinflußt. Mit anderen Worten, jeder einzelne Driver 4 "sieht" auch die übrigen Driver 4.

Bei einer geringen Anzahl von Drivern 4, beispielsweise bei vier Drivern 4, ist diese Beeinflussung durch die anderen Driver relativ niedrig. Liegen aber beispielsweise 24 Driver vor, so kann der Einfluß der anderen Driver auf den gerade ausgewählten Driver nicht vernachlässigt werden, da der dann gerade angewählte Driver mit den Kapazitäten von allen anderen 23 Drivern belastet ist. Mit anderen Worten, in einem solchen Fall ist die Arbeitsgeschwindigkeit des Bussystems nicht unerheblich verringert.

Es ist daher Aufgabe der vorliegenden Erfindung, ein Bussystem anzugeben, das bedarfsabhängig in der Lage ist, mit minimaler Kapazitätsbelastung zu arbeiten, um so die Arbeitsgeschwindigkeit des Bussystemes nicht oder nur wenig zu beeinträchtigen.

Diese Aufgabe wird bei einem Bussystem der eingangs genannten Art erfindungsgemäß dadurch gelöst, daß der Bus zwischen wenigstens zwei Verbindungsstellen eine wahlweise Unterbrechungsstelle aufweist.

Mit anderen Worten, bei dem erfindungsgemäßen Bussystem kann der Bus bedarfsabhängig ohne weiteres zwischen zwei Verbindungsstellen unterbrochen werden, was bedeutet, daß sämtliche Driver, die in der Signalrichtung vor der Unterbrechungsstelle liegen, nicht mehr zur Kapazität des Bussystemes beitragen. Das heißt, bei dem erfindungsgemäßen Bussystem werden alle Driver, die "vor" der Unterbrechungsstelle liegen, von der Betrachtung ausgeschlossen, wodurch eine erhebliche Reduzierung der Kapazität ermöglicht wird, die ihrerseits wiederum die Verminderung der Arbeitsgeschwindigkeit des Bussystemes erheblich reduziert.

Wesentlich an der vorliegenden Erfindung ist somit insbesondere, daß zwischen wenigstens zwei Verbindungsstellen zwischen dem Bus und den Leitungssträngen eine bedarfsweise Unterbrechungsmöglichkeit für den Bus geschaffen wird. Das heißt, der Bus kann bei dem erfindungsgemäßen Bussystem ohne weiteres zwischen zwei Verbindungsstellen zwischen dem Bus und den Leitungssträngen unterbrochen werden. Damit bleiben die Ausgangssignale sämtlicher Driver, die in Signalrichtung an dem Bus vor der Unterbrechungsstelle liegen, bei der Auswertung der am Ausgang DOUT liegenden Signale unberücksichtigt. Eine wahlweise Unterbrechungsstelle kann beispielsweise dadurch geschaffen werden, daß der Bus 1 (vgl. zunächst Fig. 3) zwischen zwei Verbindungsstellen 2 derart gestaltet wird, daß er zwischen diesen beiden Verbindungsstellen ohne weiteres unterbrechbar ist. Dies kann beispielsweise durch Einwirkung eines entsprechenden Laserstrahles, durch Ätzen oder durch sonstiges Abtragen geschehen. Mit anderen Worten, bei dem erfindungsgemäßen Bussystem kann durch die wahlweise angeordnete Unterbrechungsstelle sichergestellt werden, daß nicht benötigte Driver nicht bei der Bildung des Ausgangssignales DOUT (vgl. Fig. 3) mitwirken, um so einen Langzeitbetrieb des Bussystems zu gewährleisten.

Nachfolgend wird die Erfindung anhand der Zeichnungen näher erläutert. Es zeigen:
- Fig. 1: eine schematische Darstellung eines ersten Ausführungsbeispiels der Erfindung,
- Fig. 2: eine schematische Darstellung eines weiteren Ausführungsbeispiels der Erfindung und
- Fig. 3: ein bestehendes Bussystem.

Die Fig. 3 ist bereits eingangs erläutert worden. In den Figuren werden für einander entsprechende Bauteile jeweils die gleichen Bezugszeichen verwendet.

Fig. 1 zeigt ein Ausführungsbeispiel, bei dem von den Leitungssträngen 3₀ bis 3₇, die hier beispielsweise aus jeweils acht Leitungen bestehen können, die Leitungsstränge 3₀ bis 3₃ mit ihren zugehörigen Drivern 4 den Bus 2 an seinem Ausgang DOUT nicht kapazitätsmäßig beeinträchtigen, da der Bus 2 zwischen den Verbindungsstellen 2 der Leitungsstränge 3₃ und 3₄ unterbrochen ist. Die Unterbrechung wurde an dieser Stelle gewählt, da lediglich die Leitungsstränge 3₄ bis 3₇ mit ihren zugehörigen Drivern 4 im vorliegenden Fall benötigt werden. Mit anderen Worten, bei der Erfindung sind Unterbrechungsstellen des Busses 1 dort vorgesehen, wo ein Abtrennen von nicht benötigten Leitungssträngen erwartet werden kann.

Diese Unterbrechungsstellen können so gestaltet werden, daß sie "Soll-Bruchstellen" für den Bus 1 darstellen, an denen dieser elektrisch besonders leicht aufgetrennt werden kann. Beispielsweise ist es möglich, hierfür den Bus 1 an bestimmten Orten, an denen Unterbrechungsstellen liegen, so zu gestalten, daß er ohne weiteres durch Einwirkung eines Laserstrahles aufzuschmelzen ist. Selbstverständlich sind aber auch andere Unterbrechungsmöglichkeiten für den Bus 1 denkbar, wie beispielsweise eine Unterbrechung durch lokale Einwirkung eines Ätzmittels.

Besonders vorteilhaft ist es aber, wenn die Unterbrechungsstellen durch programmierbare Einheiten 6 mit den Zuständen "Unterbrechen" und "Verbinden" realisiert werden, wobei diese programmierbaren Einheiten auch noch mit einer Steuereinheit 7 verbunden werden können, welche die programmierbaren Einheiten 6 in den gewünschten Zustand ansteuert.

Fig. 2 zeigt ein weiteres Ausführungsbeispiel der Erfindung, bei dem potentielle Unterbrechungsstellen zwischen den Verbindungsstellen 2 der Leitungsstränge 3₁ und 3₂, der Leitungsstränge 3₃ und 3₄ und der Leitungsstränge 3₅ und 3₆ vorgesehen sind. Abhängig von der Verwendung des Busses in beispielsweise einem eDRAM können hier Auftrennungen des Busses an den angegebenen Unterbrechungsstellen vorgenommen werden. Es ist also möglich, mit dem Ausgang DOUT des Busses 1 nur die Leitungsstränge 3₆ und 3₇ oder nur die Leitungsstränge 3₄ bis 3₇ oder nur die Leitungsstränge 3₂ bis 3₇ mit ihren zugehörigen Drivern 4 zu verbinden, indem an den angegebenen Unterbrechungsstellen eine Auftrennung vorgenommen wird. Selbstverständlich können aber auch alle Leitungsstränge 3₀ bis 3₇ mit dem Ausgang DOUT verbunden bleiben, indem keine Auftrennungen an den Unterbrechungsstellen vorgenommen werden.

Wird in dem Ausführungsbeispiel von Fig. 2 eine Auftrennung zwischen den Verbindungsstellen mit den Leitungssträngen 3₅ und 3₆ vorgenommen, so kann an die Ansteuerleitungen 5 für die Driver 4 der Leitungsstränge 3₀ bis 3₅ jeweils Massepotential GND angelegt werden, wie dies in Fig. 2 gezeigt ist.

Die Busse 1 können zu einer Leitung reduziert sein. Ebenso ist es auch möglich, daß mehrere Busse 1 jeweils aus einzelnen Leitungen 8 bestehen, in denen die programmierbaren Einheiten 6 als Unterbrechungsstellen in verschiedenen Lagen angebracht sind, wie dies in einer Einzelheit A der Fig. 2 veranschaulicht ist.

Die Erfindung schafft so auf einfache Weise die Möglichkeit, nur solche Leitungsstränge 3₀ bis 3₇ mit einem Bus 1 zu verbinden, die tatsächlich benötigt werden. Durch Abbrennen oder Wegschalten der übrigen Leitungsstränge wird gewährleistet, daß ein kapazitätsarmes Bussystem vorliegt, dessen Arbeitsgeschwindigkeit nur so wenig als möglich durch die Kapazitäten der verbleibenden Leitungsstränge und Driver 4 beeinträchtigt ist.

## Patentansprüche

1. Bussystem mit einem zu einem Ausgang (DOUT) führenden Bus
(1) und einer Vielzahl von Leitungssträngen (3₁ bis 3₇), die über jeweils einen Driver (4) an Verbindungsstellen
(2) mit dem Bus (1) verbunden sind,
**dadurch gekennzeichnet**, daß der Bus (1) zwischen wenigstens zwei Verbindungsstellen (2) eine wahlweise Unterbrechungsstelle aufweist.

2. Bussystem nach Anspruch 1,
**dadurch gekennzeichnet**, daß die wahlweise Unterbrechungsstelle bei Bedarf eine Unterbrechung des Busses (1) erlaubt.

3. Bussystem nach Anspruch 1 oder 2,
**dadurch gekennzeichnet**, daß die Unterbrechungsstellen in regelmäßigen Intervallen längs des Busses (1) vorgesehen sind.

4. Bussystem nach einem der Ansprüche 1 bis 3,
**dadurch gekennzeichnet**, daß der Bus ein Tristate-Bus (1) ist.

5. Bussystem nach einem der Ansprüche 1 bis 4,
**dadurch gekennzeichnet**, daß jeder Leitungsstrang (3₀ bis 3₇) mehrere Leitungen aufweist.

6. Bussystem nach einem der Ansprüche 1 bis 5,
**dadurch gekennzeichnet**, daß der Bus (1) zu einer Leitung reduziert ist.

7. Bussystem nach einem der Ansprüche 1 bis 6,
**dadurch gekennzeichnet**, daß mehrere Busse jeweils aus einzelnen Leitungen bestehen, die hinsichtlich Lage der Unterbrechungsstellen in den Leitungen der einzelnen Busse (1) und der Anzahl der Leitungen in den Bussen (1) unterschiedlich sind.

8. Bussystem nach einem der Ansprüche 1 bis 7,
**dadurch gekennzeichnet**, daß die Unterbrechungsstellen jeweils durch eine programmierbare Einheit mit den Zuständen "Unterbrechen" und "Verbinden" realisiert sind.
